# EUROPEAN PATENT SPECIFICATION

(11) **EP 3 307 503 B1**
(45) Date of publication and mention of the grant of the patent: **10.11.2021**
(21) Application number: 16806945.8
(22) Date of filing: 31.05.2016
(51) Int. Cl.: B27L 7/00, C10L 5/36, C10L 5/44

(54) **METHOD AND DEVICE FOR SPLITTING A PIECE**
VERFAHREN UND VORRICHTUNG ZUM SPALTEN EINES STÜCKS
PROCÉDÉ ET DISPOSITIF POUR FRACTIONNER UNE PIÈCE

(30) Priority: 09.06.2015 FI 20155439
(43) Date of publication of application: 18.04.2018
(73) Proprietor: Esmocon Oy, 40800 Vaajakoski (FI)
(72) Inventor: Närhi, Erkki, 40800 Vaajakoski (FI)
(74) Representative: Kolster Oy Ab
(86) International application number: PCT/FI2016/050383
(87) International publication number: WO 2016/198738

(56) References cited:
- EP-A1- 1 908 344
- WO-A1-2008/036028
- CN-A- 104 441 170
- DE-U1- 20 302 874
- FI-A- 20 125 269
- GB-A- 191 007 399
- US-A- 181 033
- US-A- 534 746
- US-A- 4 019 548
- US-A- 4 326 703
- US-A1- 2009 307 968
- US-A1- 2010 075 095
- US-A1- 2014 096 869

## Description

The invention relates to a method for splitting a piece according to the preamble of claim 1. The invention also relates to a splitting device according to the preamble of claim 3. Such a method and such a device are known from EP 1 908 344 A1.

According to studies, the use of firewood as the source of heating energy in single-family houses increases year by year in Finland. In Finland, there are about 4 million small fireplaces burning chopped firewood and split billets in detached houses, semi-detached houses and terraced houses as well as in holiday houses. This number increases annually by several tens of thousands in new and renovated single-family houses. Recent building regulations consider the energy-efficiency of houses but also their energy self-sufficiency e.g. in fault situations of power-distribution and district heating networks. Hence, small fireplaces function as important additional and backup heating systems in recent residential buildings. They are also used as main heating systems in many holiday homes which are periodically inhabited.

Wood is an important renewable and environmentally-friendly energy source and its burning is not considered increasing carbon dioxide emissions. When growing, a tree traps solar energy in its storage tissue and the same amount of carbon is bound to it which then is re-released to the natural cycle as wood burns or decomposes. In recent years, there has been more and more consideration of flue gas emissions of small fireplaces. Uncontrolled and high flue gas emissions are harmful to the environment as they deteriorate the quality of breathing air. They also incur financial losses to the users of fireplaces due to their diminished energy efficiency. As a whole, the environmentally-friendliness of wood burning is dependent on many factors, such as the quality of firewood, the fireplace and the smoke flue connected to it as well as the usage and user of the fireplace. Usually, the manufacturer of factory-made fireplaces and smoke flues gives instructions on their use. The quality of firewood is a result of its manufacturing and storage process phases, beginning from the felling of standing trees and ending to the burning of wood in a fire chamber. Usually, the quality of firewood is good when it is manufactured of good raw material, manufactured and stored by correct methods and dried sufficiently dry. The firewood thus obtained is adequately accurate dimensionally, dry, clean and mould-free.

A conventional way to manufacture chopped firewood for fireplaces of felled and lopped poles is to cut them first e.g. by a chain saw into bits of suitable length. The poles are often cut in the first phase into bits of about metre length and the bits are then split by an axe or a wood cleaving machine into smaller pieces which are, when dried, suitable to be burned as such in larger fire chambers, e.g. in baking ovens. These longer firewood billets can also be used as piled as semi-finished products in the drying phase and the metre-long billets can be cut afterwards into two, three or four pieces. Hence, it is equivalently possible to manufacture chopped firewood being about 50, 33 and 25 cm long for smaller fireplaces. After the splitting, the billets or chopped firewood have been conventionally transported and piled one by one either outside to dry or to a wood shed to be stored. From the wood shed, the chopped pieces of firewood have been typically lifted one by one into a wood pannier or rack and carried into the vicinity of a fireplace. The manufacture of firewood as handwork by cutting them with a saw, splitting them with an axe and piling and/or transferring them one by one in the different phases is laboursome and is usually suitable for small-scale firewood manufacture for the needs of a single user.

For years, there have been on the market various types of wood chopping machines to manufacture larger quantities of firewood. Their power source is often the machine's own or a tractor's combustion engine or an electric motor operating by mains current. Common cutting ways of a firewood trunk are circular-saw or chain-saw blades and guillotine-like cutting blades. Of the cutting blade, there also exist models which cut and split at the same time. The common splitting methods of a cut firewood trunk are rotating conic screws and screw- and hydraulically-operated splitting blades.

In order to decrease manual labour, part of chopping machines are far automated models. They are mainly intended for professional production of firewood. In them, the firewood trunks are often lifted by a crane or a hoisting device onto a trunk table from which they are hydraulically transferred onto a supply line or roller assembly of a cutting device. The belt or rollers feed the trunk automatically into sawing or cutting. The accurate cutting length is defined by automatic measuring devices or an adjustable stopper. The measuring devices automatically define the correct and accurate measure for the firewood or, alternatively, the trunk is stopped into a stopper adjusted to the correct measure. After the cutting, the trunk is often dropped onto a splitting table on which it is pushed through splitting blades. In the sawing phase, an automatic chopping machine can also measure the thickness of the trunk which controls the number of splitting blades used and the number of separate pieces of chopped firewood created. Typically, a trunk is split in these machines into 2-8 separate and loose pieces of chopped firewood which are further transferred by a continuously-operating chain or belt conveyor to dry in a pile on the ground, onto a transport platform, into a storage, a dryer, a bulk bag or cage.

In the drying phase, the chopped firewood is dried into the moisture content of 15-20%. The drying can be implemented as natural drying utilising sun and wind which lasts for several moths or more quickly as artificial drying using either fanned air cooling or fanned air heating to intensify the drying process. After the drying, sellable separate pieces of chopped firewood are delivered to end-users usually by a lorry or a trailer of a tractor or a car. A common way is also to deliver the pieces of chopped firewood as randomly thrown into a bulk bag of 1-2.5 m³ to the end-user who often transfers the pieces by hand from the courtyard into piles in the wood shed of his house. From the wood shed, the separate pieces of chopped firewood are collected by hand onto one's lap or carrier racks or panniers with which the firewood is transferred beside the fireplace. Some firewood manufacturers package the separate pieces of chopped firewood ready for the end-users into batches of 5-40 kg by using mesh bags, cardboard boxes or binding tapes and other such packaging materials.

Typically, the last transfer phase of firewood before their burning takes place by lifting them one by one from a pannier or a package into the fire chamber in which a suitable amount is usually set according to the instructions of the fireplace manufacturer and/or the experiences, preferences and requirements of the user. For most recent fireplaces accumulating heat, the general instruction for good and effective burning can be considered the burning of two successive fire chambers of wood. Then, wood is burned for one to three armfuls i.e. about 5-15 kg and the equivalent heating time is about 1.5-2 hours if the fireplace operates as the additional heating source of the one-family home. In the first batch to be burned, smaller pieces of chopped firewood being the diameter of about 8-10 cm are piled spaciously for about 5 kg into a setting on top of which is set an adequate amount of quality kindlings, such as wooden splinters, chips, clean uncoated paper or cardboard, separate lighter pieces etc. By this method, most of wood material gasifiable in the firing phase can be burned, whereby the efficiency of the fire chamber is at its highest and the harmful carbon monoxide (CO), hydrocarbon (HC), nitrogen oxides (NOx) and fine particle emissions at their lowest.

In the second batch, larger pieces of chopped firewood being the diameter of about 12-15 cm are used for the total amount of about 5-10 kg and they are set densely on the white-hot but flameless embers of the first batch. By this method, the gasifying of wood in the firing phase of the second batch can be decelerated and, thus, the efficiency of this second batch can be increased and its flue gas emissions decreased. Usually, there should be enough free burning space at the top part of the fire chamber for flue gases and the fire chamber should not be filled for more than 2/3 of its volume with firewood.

A disadvantage of recently used automatic chopping machines is that they almost always produce separate pieces of chopped firewood at the end of their conveyor into a pile or a bulk bag. They handle, cut and split firewood trunks into chopped firewood efficiently but the further treatment of separate pieces of chopped firewood before their burning in a small fireplace still requires several handwork phases. Quite often, a firewood manufacturer can handle separate pieces of or bulk-bagged chopped firewood mechanically but at least the end-user transfers the separate pieces of chopped firewood delivered to his courtyard by hand from a pile or a bulk bag into the storage. The wood sheds of one-family houses are often smallish, particularly in urban areas, and the one-family houses located in these areas are the most common end-users of chopped firewood delivered as purchased goods. In many cases in order to save space, separate pieces of chopped firewood must be piled manually in these wood sheds and it requires labour time. If the transfer of chopped firewood into a shelter from rain and rising damp is delayed for some reason, there is a risk that firewood gets wet and thus becomes mouldy and its quality weakens. Mouldy firewood in the interior spaces of dwellings weakens the quality of breathing air and thus causes the end-users a health risk. Usually, the transfer of separate pieces of chopped firewood after storage and possibly their setting onto a shelf or some other space in the dwelling in the vicinity of fireplaces occurs by hand. In the last phase before burning, the end-user lifts the separate pieces of chopped firewood and sets them randomly into the fire chamber often in the order that they happen to be in the pannier or wood shelf. Many times in the heating phase, the user of the fireplace does not take notice on the amount of kindlings or chopped firewood and their setting in the fire chamber, but conventionally fills the fire chamber with too much firewood and sets the kindlings at the bottom part of the firewood setting. As a result, the heat of kindlings gasifies too large an amount of wood material on top of it and there is no time to burn most part of this gas mixture in the small fireplace. This unburned gas mixture causes increased harmful flue gas emissions and, at the same time, the efficiency of the fireplace weakens as the amount of wood and the costs and labour related to heating increase.

Ready-made chopped-firewood boxes, bags and bundles directed at end-users have often been packaged by hand, which increases the price of a cubic metre of firewood considerably. On the market, there is no cost-effective and well-designed packaging method and machine of chopped firewood in the scale of serial production, which has for its part limited the expansion of industrial manufacture of chopped firewood.

An object of the invention is to disclose a method and a device which eliminate disadvantages related to recent methods and devices. A particular object of the invention is to introduce a method and a device which enable the controlled partial splitting of a machinable piece and enable the efficient industrial manufacture of firewood by splitting a wood billet partially and by leaving the created chopped firewood billets controllably fast to each other for a desired part. Furthermore, an object of the invention is to disclose a method and a device for splitting a wood billet such that created chopped firewood billets are partially prepackaged by themselves and, however when required, effortlessly detachable from each other by the end-user by folding by hand without tools by the fireplace. An additional object of the invention is to introduce a method and a device which can improve the manual handling of separate pieces of chopped firewood and leave them as a group of many pieces and which can improve the packaging denseness of the chopped firewood in various production, drying and storage phases.

The method and the device according to the invention are characterised by what is presented in the claims.

The inventive idea behind the method and the splitting device according to the invention is that a machinable piece is left controllably partially unsplit in a desired fastening area by pressing it in a direction intersecting in relation to splits during the splitting motion. Pressing force into the unsplit fastening area of the piece is conveyed typically by means of pressing jaws (1-20 pieces), pressing chains (1-10 pieces), pressing belts (1-10 pieces), ropes (1-10 pieces) or equivalent pressing elements. In the method and the device, the machinable piece and the splitting blades are pressed against each other at an adequate pressing force and either the piece or the tool or both make a mutual machining motion. The type of this machining motion can be linear, rotating or their combination. The number of splitting blades is typically 1-20 pieces.

Furthermore, the inventive idea is that the mutual splitting motion of the piece and the tool is controlled at a desired length and, thus, the sections of the piece made by splitting can be partially left fast to each other. Typically, the cross-section of the piece being split can be circular, oval, polygonal or free form and its maximum diameter can be between about 1-1,000 mm and its length about 10-10,000 mm. The diameters of sections split from the piece can vary between about 1-1,000 mm. The length of the mutual unsplit fastening area of the split sections is typically about 0.1-95% of their total length. The pressing element of the device is arranged pressable in the fastening area of the piece being split for keeping the fastening area uniform and for splitting the piece partially. The location and size of the fastening area can be adjusted by modifying the location and shape of the pressing elements and splitting blades, whereby desired strength is reached for fastening bridges between the sections. The fastening bridges must endure without separating from each other during the manufacture, storage and transport phases. On the other hand, the fastening bridges should not be too durable in order for the end-user be able to separate the split sections from each other without effort when required.

The method and the splitting device according to the invention provide considerable advantages compared with recently known manufacturing methods of firewood. With the method and device according to the invention, it is possible to effectively manufacture in serial production pieces of chopped firewood which are prepackaged in groups of 2-20 pieces already in their splitting phase. It is possible to integrate the splitting device according to the invention as part of a chopping machine, whereby no separate packaging phase is required for packaging the chopped firewood. The mutual binding of the pieces of chopped firewood takes place by means of unsplit wood material without separate binding cords or equipment. With the splitting device according to the invention, it is possible to machine from a wood billet by one splitting motion pieces of chopped firewood partially fastened to each other which the end-user can, when required, effortlessly detach from each other by folding without tools by the fireplace.

The firing characteristics of firewood machined by the method and the device according to the invention are more improved than those of traditionally manufactured firewood. The invented method enables the combining of the packaging arrangement and wood material functioning as fuel into one piece in the scale of serial production. It is easier and quicker to manually transfer and pile firewood machined this way than an equivalent amount of separate pieces of chopped firewood, which again decreases the risk of the wood quality weakening e.g. due to getting wet and/or moulding during long-term intermediate storage. The package density is also greater with this prepackaged chopped firewood than that of separate pieces of chopped firewood, which enables the more efficient use of production, drying and storage facilities. If desired, it is possible to use the prepackaged chopped firewood batch as a consumer package for end-users. Pieces of chopped firewood partially split of a circular trunk can be stored in a wood shed or even by the fireplace in vertical position without a separate pannier or wood shelf. The setting of firewood in the fire chamber is also easier if this prepackaged chopped-firewood batch is fitted as such in the fire chamber without separating the pieces of chopped firewood from each other. Particularly when adding firewood to the second batch to be burned on top of embers of the first batch, such a compactly packaged chopped-firewood batch gasifies suitably slowly enabling a low-emission and efficient burning event.

Next, the invention will be described in more detail with reference to the accompanying drawings in which
Fig. 1 shows the operating principle of a splitting method according to the invention and
Fig. 2 shows the structural principle of a splitting device according to the invention.

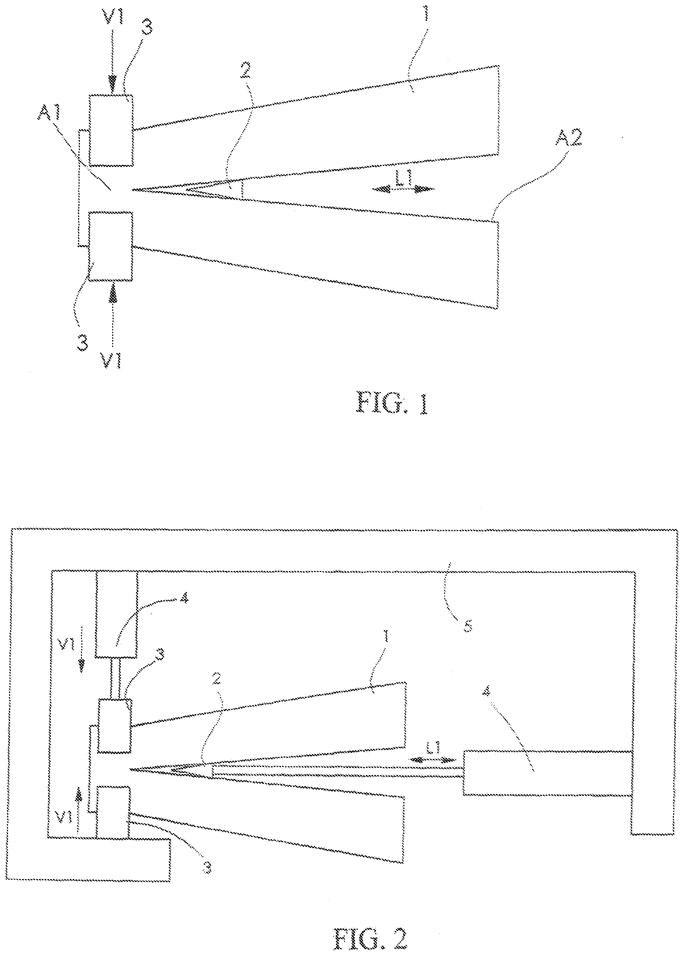

In the way shown in Fig. 1 in the method, a machinable piece 1 and pressing elements 3 are pressed in the first work phase against each other by sufficient pressing force VI. The pressing force VI can be conveyed to the piece e.g. by means of jaws 3, a chain, a belt, a rope or some other such element. In the next phase, either the machinable piece 1, a splitting element 2 or both of them perform a mutual machining motion L1. If required, the pressing elements 3 transfer together with the machinable piece 1 during the machining motion L1. Tensile stress caused by the splitting element 2 inside the machinable material causes the machinable piece 1 to split until compression stress of the material in the range of the pressing elements 3 eliminates the tensile stress and the splitting can thus be limited at a desired splitting area A2. In the machinable piece, the number of splitting areas can be adjusted by modifying the construction and number of splitting elements. The direction of the machining motion can be linear or rotating or freely curved in their combination. The extension of the unsplit fastening area A1 keeping the parts fast and simultaneously the strength of fastening connection are adjusted by modifying the length of the machining motion and the location and shape of the pressing element.

The main components of the splitting device shown in Fig. 2 are a body 5, a pressing element 3 and a splitting element 2. The pressing element 3 can be shaped clamping jaws which can obtain their driving power VI from a hydraulic or pneumatic actuator 4, a wedge, a screw, a lever or cam mechanism or some other device. Typically, the device includes 1-20 pieces of pressing elements 3 but there can be more of them. The mutual machining motion L1 of the machinable piece 1 and the splitting element 2 obtains its driving power from a hydraulic or pneumatic actuator 4, a wedge, a screw, a lever or cam mechanism or some other mechanism. The splitting element 2 can typically be a blade, a screw, a wire or some other equivalent cutting element and their number can be typically 1-20 pieces or more. The splitting method and device according to the invention can also be utilised in other applications than in the manufacturing process of firewood. With this method and device, it is possible to combine the cutting of any fixed piece manufactured of splittable material into smaller bits and it's pre-packaging into the same manufacturing phase by leaving split sections partially fast to each other by means of fastening areas. Applications able to utilise such a controlled partial splitting method are e.g. the chopping of hard and fragile foodstuffs, such as root vegetables and vegetables, and their pre-packaging. With the method, it is possible to chop and prepackage also softer materials e.g. foodstuffs when cooled or frozen, when the bits can be separated from each other if further processing so requires as smaller batches e.g. as frozen foods. The method can be applied to the splitting and packaging of waxy and rubbery materials in low temperatures.

The splitting method and splitting device according to the invention can be utilised in splitting machines designed and built especially for them. However, they can also be utilised e.g. in existing splitting and manufacturing machines of firewood as a further processing method of chopped firewood, as attachments of splitting blades and as a packaging device.

The invention is not limited to the described advantageous embodiments, but it can vary within the scope of the invention as defined in the claims.

## Claims

1. A method for partially splitting a piece, the method comprising pressing the piece (1) in a direction intersecting with a splitting direction by pressing elements (3) during a machining motion (L1) of a splitting element (2) and the machinable piece (1) and splitting the piece partially, **characterized by** controlling the location and shape of splitting areas (A2) in the machinable piece (1) by pressing the machinable piece (1) in a direction intersecting with the splitting direction by the pressing elements (3) during the machining motion (L1) of the splitting element (2) and the machinable piece (1) such that tensile stress caused by the splitting element (2) inside the machinable material causes the machinable piece (1) to split until compression stress of the material in the range of the pressing elements (3) eliminates the tensile stress and the splitting can thus be limited at a desired splitting area (A2).

2. A method according to claim 1, **characterized by** using unsplit areas between split sections as fastening bridges and a binding method.

3. A device for partially splitting a piece, which includes a body (5), a splitting element (2) for splitting a piece (1) settable in the device and a pressing element (3) for pressing splittable pieces during a machining motion (L1), wherein the pressing direction of the pressing element (3) is intersecting in relation to the machining direction, wherein the pressing element of the device is arranged pressable in a fastening area of the splittable piece (1) in order to keep the fastening area uniform and to split the piece partially, **characterized in that** the device is configured such that the location and shape of splitting area (A2) in the piece (1) is adapted to be controlled by pressing the piece (1) in a direction intersecting with the splitting direction by the pressing element (3) during the machining motion (L1) of the splitting element (2) and the piece (1) such that tensile stress caused by the splitting element (2) inside the piece (1) causes the piece (1) to split until compression stress of the piece (1) in the range of the pressing element (3) eliminates the tensile stress and the splitting is limited at a desired splitting area (A2), wherein the device includes control elements for controlling the mutual motion of the piece (1) and the splitting element (2) and for splitting the piece (1) partially, wherein the mutual splitting motion of the piece (1) and the splitting element (2) is controllable at a desired length and, thus, the sections of the piece (1) made by splitting are partially left fast to each other.

4. A splitting device according to claim 3, **characterized in that** the pressing elements are clamping jaws, chains, belts, ropes or some equivalent elements.

## Patentansprüche

1. Verfahren zum teilweisen Spalten eines Stücks, wobei das Verfahren das Pressen des Stücks (1) in eine Richtung, die eine Spaltrichtung überschneidet, mit Presselementen (3) während einer Bearbeitungsbewegung (L1) eines Spaltelements (2) und des bearbeitbaren Stücks (1) und das teilweise Spalten des Stücks umfasst, **gekennzeichnet durch** Steuern der Stelle und der Form von Spaltbereichen (A2) im bearbeitbaren Stück (1) durch Pressen des bearbeitbaren Stücks (1) in eine Richtung, die die Spaltrichtung überschneidet, mit Presselementen (3) während der Bearbeitungsbewegung (L1) des Spaltelements (2) und des bearbeitbaren Stücks (1) derart, dass eine Zugspannung, die durch das Spaltelement (2) im bearbeitbaren Material bewirkt wird, bewirkt, dass das bearbeitbare Stück (1) gespalten wird, bis eine Druckspannung des Materials in der Region der Presselemente (3) die Zugspannung aufhebt und das Spalten somit auf einen gewünschten Spaltbereich (A2) begrenzt werden kann.

2. Verfahren nach Anspruch 1, **gekennzeichnet durch** das Verwenden von nicht gespaltenen Bereichen zwischen gespaltenen Abschnitten als Befestigungsbrücken und ein Bindeverfahren.

3. Vorrichtung zum teilweisen Spalten eines Stücks, die einen Körper (5), ein Spaltelement (2) zum Spalten eines Stücks (1), das in der Vorrichtung einstellbar ist, und ein Presselement (3) zum Pressen von spaltbaren Stücken während einer Bearbeitungsbewegung (L1) beinhaltet, wobei die Pressrichtung des Presselements (3) mit Bezug auf die Bearbeitungsrichtung überschneidend ist, wobei das Presselement der Vorrichtung in einem Befestigungsbereich des spaltbaren Stücks (1) pressbar angeordnet ist, um den Befestigungsbereich einheitlich zu halten und das Stück teilweise zu spalten, **dadurch gekennzeichnet, dass** die Vorrichtung derart ausgelegt ist, dass die Stelle und die Form des Spaltbereichs (A2) im Stück (1) angepasst ist, durch Pressen des Stücks (1) in eine Richtung, die die Spaltrichtung überschneidet, mit den Presselementen (3) während der Bearbeitungsbewegung (L1) des Spaltelements (2) und des Stücks (1) derart gesteuert zu werden, dass eine Zugspannung, die durch das Spaltelement (2) im Stück (1) bewirkt wird, bewirkt, dass das Stück (1) gespalten wird, bis eine Druckspannung des Stücks (1) in der Region des Presselements (3) die Zugspannung aufhebt und das Spalten auf einen gewünschten Spaltbereich (A2) begrenzt wird, wobei die Vorrichtung Steuerelemente zum Steuern der gegenseitigen Bewegung des Stücks (1) und des Spaltelements (2) und zum teilweisen Spalten des Stücks (1) beinhaltet, wobei die gegenseitige Spaltbewegung des Stücks (1) und des Spaltelements (2) auf einer gewünschten Länge steuerbar ist, wodurch die Abschnitte des Stücks (1), die durch das Spalten hergestellt werden, teilweise fest aneinander verbleiben.

4. Spaltvorrichtung nach Anspruch 3, **dadurch gekennzeichnet, dass** die Presselemente Klemmbacken, Ketten, Gurte, Seile oder äquivalente Elemente sind.

## Revendications

1. Procédé pour fractionner partiellement une pièce, le procédé comprenant l'étape pour comprimer la pièce (1) dans une direction coupant une direction de fractionnement par des éléments de pression (3) pendant un mouvement d'usinage (L1) de l'élément de fractionnement (2) et de la pièce usinable (1) et fractionner la pièce partiellement, **caractérisé en ce qu'**en contrôlant l'emplacement et la forme des zones de fractionnement (A2) dans la pièce usinable (1) en comprimant la pièce usinable (1) dans une direction coupant la direction de fractionnement par les éléments de pression (3) pendant le mouvement d'usinage (L1) de l'élément de fractionnement (2) et de la pièce usinable (1) de sorte que la contrainte de traction provoquée par l'élément de fractionnement (2) à l'intérieur du matériau usinable amène la pièce usinable (1) à se fractionner jusqu'à ce que la contrainte de compression du matériau dans la plage des éléments de pression (3) supprime la contrainte de traction et le fractionnement peut être ainsi limité à une zone de fractionnement (A2) souhaitée.

2. Procédé selon la revendication 1, **caractérisé par** l'utilisation de zones non fractionnées entre les sections fractionnées en tant que ponts de fixation et un procédé de liaison.

3. Dispositif pour fractionner partiellement une pièce, qui comprend un corps (5), un élément de fractionnement (2) pour fractionner une pièce (1) pouvant être installée dans le dispositif et un élément de pression (3) pour comprimer les pièces fractionnables pendant un mouvement d'usinage (L1), dans lequel la direction de pression de l'élément de pression (3) coupe la direction d'usinage, dans lequel :
l'élément de pression du dispositif est agencé de manière comprimable dans une zone de fixation de la pièce fractionnable (1) afin de maintenir la zone de fixation uniforme et fractionner la pièce partiellement, **caractérisé en ce que** le dispositif est configuré de sorte que l'emplacement et la forme de la zone de fractionnement (A2) dans la pièce (1) est adaptée pour être contrôlés en comprimant la pièce (1) dans une direction coupant la direction de fractionnement par l'élément de pression (3) pendant le mouvement d'usinage (L1) de l'élément de fractionnement (2) et de la pièce (1) de sorte que la contrainte de traction provoquée par l'élément de fractionnement (2) à l'intérieur de la pièce (1) amène la pièce (1) à se fractionner jusqu'à ce que la contrainte de pression de la pièce (1) dans la plage de l'élément de pression (3) supprime la contrainte de traction et le fractionnement est limité au niveau d'une zone de fractionnement (A2) souhaitée, dans lequel le dispositif comprend des éléments de commande pour commander le mouvement mutuel de la pièce (1) et de l'élément de fractionnement (2) et pour fractionner la pièce (1) partiellement, dans lequel le mouvement de fractionnement mutuel de la pièce (1) et de l'élément de fractionnement (2) est contrôlable à une longueur souhaitée et ainsi, les sections de la pièce (1) réalisées par fractionnement sont laissées partiellement collées les unes aux autres.

4. Dispositif de fractionnement selon la revendication 3, **caractérisé en ce que** les éléments de pression sont des mâchoires de serrage, des chaînes, des courroies, des câbles ou certains éléments équivalents.
